Europäisches Patentamt

European Patent Office

Office européen des brevets

(19)

(11) Veröffentlichungsnummer: **0 463 624 A2**

# (12) EUROPÄISCHE PATENTANMELDUNG

(21) Anmeldenummer: **91110654.0**

(22) Anmeldetag: **27.06.91**

(51) Int. Cl.5: **C08G 77/60**, C04B 35/56

(30) Priorität: **29.06.90 DE 4020828**

(43) Veröffentlichungstag der Anmeldung:
**02.01.92 Patentblatt 92/01**

(84) Benannte Vertragsstaaten:
**BE DE FR GB IT NL**

(71) Anmelder: **WACKER-CHEMIE GMBH
Prinzregentenstrasse 22
W-8000 München 22(DE)**

(72) Erfinder: **Kalchauer, Wilfried Dr.
Carl-Bosch-Str. 1
W-8263 Burghausen(DE)**
Erfinder: **Pachaly, Bernd, Dr.
Robert-Koch-Strasse 167
W-8263 Burghausen(DE)**
Erfinder: **Rösch, Lutz, Prof. Dr.
Von-Bayer-Strasse 16
W-8263 Burghausen(DE)**

(54) **Verfahren zur Herstellung von Organopolysilanen.**

(57) Verfahren zur Herstellung von Organopolysilanen, dadurch gekennzeichnet, daß mindestens ein Disilan der allgemeinen Formel

$$R_k R^3_m Si_2(OR^1)6\text{-}k\text{-}m \qquad (I)$$

worin

R    gleich oder verschieden sein kann und Wasserstoffatom oder einwertige, gesättigte organische Reste bedeutet,

$R^3$    gleich oder verschieden sein kann und einwertige, ungesättigte organische Reste bedeutete,

$R^1$    gleich oder verschieden sein kann und einwertige Alkylgruppen bedeutet,

k    0, 1, 2 oder 3 und

m    1, 2, 3 oder 4 bedeutet, wobei die Summe aus k und m kleiner oder gleich 4 ist,

gegebenenfalls im Gemisch mit einer Verbindung der Formel

$$R_n Si_2(OR^1)6\text{-}n \qquad (II)$$

worin R und $R^1$ jeweils gleich oder verschieden sein können und eine der oben dafür angegebenen Bedeutungen haben und n 0, 1, 2 oder 3 ist,

in Anwesenheit von mindestens einer Verbindung der allgemeinen Formel

$$MOR^2 \qquad (III)$$

worin $R^2$ einen einwertigen Kohlenwasserstoffrest und M Alkalimetallatom bedeutet, umgesetzt wird.

Die Erfindung betrifft ein Verfahren zur Herstellung von Organopolysilanen und deren Verwendung.

Verfahren zur Herstellung von Organopolysilanen sind bereits bekannt. W.H. Atwell und D.R. Weyenberg beschreiben beispielsweise in J. Am. Chem. Soc. 90 (1968) 3438 ein Verfahren zur Herstellung von Organopolysilanen aus Dimethoxytetramethyldisilan. Bei diesem Verfahren werden jedoch nur Organopolysilane mit geringer Kettenlänge erhalten. Aus US Re. 31 447 (Baney et al., Dow Corning Corporation; ausgegeben am 22. November 1983) ist ein zweistufiges Verfahren zur Herstellung von Organopolysilanen mit SiOC-gebundenen Methoxygruppen bekannt. In US-PS 4,667,046 (B. Pachaly, Wacker-Chemie GmbH; ausgegeben am 19. Mai 1987) ist ein Verfahren zur Herstellung von Organopolysilanen bekannt, bei dem die Reaktionsmischung neben Trimethoxydisilan und Alkalimetallverbindung mindestens ein Organosilan mit einem Si-gebundenen Wasserstoffatom enthält. Des weiteren wird in US-PS 4,889,904 (G. Burns, Dow Corning Corp.; ausgegeben am 26. Dezember 1989) ein Verfahren zur Herstellung eines Methylpolysilans beschrieben, bei dem die Reaktionsmischung neben alkoxyfunktionellen Disilanen alkoxyfunktionelle Silane mit wenigstens einem ungesättigten Substituenten enthält. Aufgabe der Erfindung war es, ein einfaches Verfahren zur Herstellung von Organopolysilanen bereitzustellen. Diese Aufgabe wird durch die Erfindung gelöst.

Gegenstand der Erfindung ist ein Verfahren zur Herstellung von Organopolysilanen, dadurch gekennzeichnet, daß mindestens ein Disilan der allgemeinen Formel

$$R_k R^3{}_m Si_2 (OR^1)6\text{-}k\text{-}m \qquad (I)$$

worin

R gleich oder verschieden sein kann und Wasserstoffatom oder einwertige, gesättigte organische Reste bedeutet,

$R^3$ gleich oder verschieden sein kann und einwertige, ungesättigte organische Reste bedeutet,

$R^1$ gleich oder verschieden sein kann und einwertige Alkylgruppen bedeutet,

k 0, 1, 2 oder 3 und

m 1, 2, 3 oder 4 bedeutet, wobei die Summe aus k und m kleiner oder gleich 4 ist,

gegebenenfalls im Gemisch mit einer Verbindung der Formel

$$R_n Si_2 (OR^1)6\text{-}n \qquad (II)$$

worin R und $R^1$ jeweils gleich oder verschieden sein können und eine der oben dafür angegebenen Bedeutungen haben und n 0, 1, 2 oder 3 ist,
in Anwesenheit von mindestens einer Verbindung der allgemeinen Formel

$$MOR^2 \qquad (III)$$

worin $R^2$ einen einwertigen Kohlenwasserstoffrest und M Alkalimetallatom bedeutet, umgesetzt wird.

Bei dem Rest R handelt es sich vorzugsweise um Wasserstoffatom und gesättigte Kohlenwasserstoffreste mit 1 bis 12 Kohlenstoffatomen.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest und Cycloalkylreste, wie Cyclopentyl-, Cyclohexyl-, Cycloheptylreste und Methylcyclohexylreste.

Bei dem Rest R handelt es sich besonders bevorzugt um den Methyl- und den Ethylrest, insbesondere um den Methylrest.

Bei dem Rest $R^3$ handelt es sich vorzugsweise um ungesättigte Kohlenwasserstoffreste mit 1 bis 12 Kohlenstoffatomen.

Beispiele für Reste $R^3$ sind Alkenylreste, wie der Vinyl- und der Allylrest; Arylreste, wie der Phenyl- und der Naphthylrest; Alkarylreste, wie o-, m-, p-Tolylreste, Xylylreste und Ethylphenylreste, und Aralkylreste, wie der Benzylrest, der $\alpha$- und der $\beta$-Phenylethylrest.

Bei dem Rest $R^3$ handelt es sich besonders bevorzugt um den Vinyl-, Allyl-, Phenyl- und den Naphthylrest, insbesondere um den Vinyl- und den Phenylrest.

Bei dem Rest $R^1$ handelt es sich vorzugsweise um Alkylgruppen mit 1 bis 4 Kohlenstoffatomen, besonders bevorzugt um den Methyl- und Ethylrest, insbesondere um den Methylrest.

Beispiele für Reste $R^1$ sind die für R als Alkylreste mit 1 bis 4 Kohlenstoffatomen genannten Beispiele.

Die Bedeutung von k ist bevorzugt 2 und 3, besonders bevorzugt 2.

Die Bedeutung von m ist bevorzugt 1, 2 und 3, besonders bevorzugt 1 und 2.

Die Summe von k und m beträgt vorzugsweise 3 und 4.

Die Bedeutung von n ist bevorzugt 2 und 3.

Beispiele für die im erfindungsgemäßen Verfahren eingesetzten Disilane gemäß Formel (I) sind 1,1,2-Trimethyl-1,2-dimethoxyphenyldisilan, 1,1,2-Trimethyl-1,2-dimethoxyvinyldisilan, 1,1,2-Trimethyl-1,2-diethoxyphenyldisilan, 1,1,2-Trimethyl-1,2-diethoxyvinyldisilan, 1-Phenyl-1,2-dimethyltrimethoxydisilan, 1-Phenyl-1,2-dimethyltriethoxydisilan, 1-Vinyl-1,2-dimethyltrimethoxydisilan, 1-Vinyl-1,2-dimethyltriethoxydisilan, 1,2-Dimethyl-1,2-dimethoxydiphenyldisilan, 1,2-Dimethyl-1,2-dimethoxydivinyldisilan, 1,2-Dimethyl-1,2-diethoxydiphenyldisilan, 1,2-Dimethyl-1,2-diethoxydivinyldisilan, 1,1,2,2-Tetraphenyldimethoxydisilan, 1,1,2,2-Tetravinyldimethoxydisilan, 1,1,2,2-Tetraphenyldiethoxydisilan, 1,1,2,2-Tetravinyldiethoxydisilan, 1,2-Dimethyl-1,1,2-trimethoxynaphthyldisilan, 1,2-Dimethyl-1,1,2-triethoxynaphthyldisilan, 1,2-Dimethyl-1,2-dimethoxydinaphthyldisilan und 1,2-Dimethyl-1,2-diethoxydinaphthyldisilan.

Bei den im erfindungsgemäßen Verfahren eingesetzten Disilanen gemäß Formel (I) handelt es sich bevorzugt um 1-Phenyl-1,2-dimethyltrimethoxydisilan, 1-Phenyl-1,2-dimethyltriethoxydisilan, 1-Vinyl-1,2-dimethyltrimethoxydisilan, 1-Vinyl-1,2-dimethyltriethoxydisilan, 1,2-Dimethyl-1,2-dimethoxydiphenyldisilan, 1,2-Dimethyl-1,2-dimethoxydivinyldisilan, 1,2-Dimethyl-1,2-diethoxydiphenyldisilan und 1,2-Dimethyl-1,2-diethoxydivinyldisilan, wobei 1-Phenyl-1,2-dimethyltrimethoxydisilan, 1-Vinyl-1,2-dimethyltrimethoxydisilan, 1,2-Dimethyl-1,2-dimethoxydiphenyldisilan und 1,2-Dimethyl-1,2-dimethoxydivinyldisilan besonders bevorzugt werden.

Beispiele für die im erfindungsgemäßen Verfahren eingesetzten Disilane gemäß Formel (II) sind 1,1,2-Trimethyltrimethoxydisilan, 1,1,2-Trimethyltriethoxydisilan, 1,1,2-Triethyltrimethoxydisilan, 1,1,2-Triethyltriethoxydisilan, 1,2-Dimethyltetramethoxydisilan, 1,2-Dimethyltetraethoxydisilan, Methylpentamethoxydisilan, Methylpentaethoxydisilan, Methylpenta-iso-propoxydisilan, Hexamethoxydisilan, Hexaethoxydisilan und Hexa-iso-propoxydisilan.

Bei den im erfindungsgemäßen Verfahren eingesetzten Disilanen gemäß Formel (II) handelt es sich bevorzugt um 1,1,2-Trimethyltrimethoxydisilan, 1,1,2-Trimethyltriethoxydisilan, 1,2-Dimethyltetramethoxydisilan und 1,2-Dimethyltetraethoxydisilan.

Bei dem in erfindungsgemäßen Verfahren eingesetzten Disilan gemäß Formel (I) bzw. gemäß Formel (II) kann es sich jeweils um eine einzelne Art eines derartigen Disilans wie auch um ein Gemisch aus mindestens zwei verschiedenen Arten derartiger Disilane handeln.

Bei einer bevorzugten Ausführungsform des erfindungsgemäßen Verfahrens wird Disilan gemäß Formel (II) mitverwendet.

Besonders bevorzugt wird bei dem erfindungsgemäßen Verfahren als Disilan der Formel (II) ein Gemisch aus Disilan der Formel

$$R_3Si_2(OR^1)_3 \qquad (IV)$$

und Disilan der Formel

$$R_2Si_2(OR^1)_4 \qquad (V)$$

worin R und $R^1$ eine der oben angegebenen Bedeutungen haben, eingesetzt, wobei das Molverhältnis von Disilan der Formel (IV) zu Disilan der Formel (V) in dem Gemisch vorzugsweise zwischen 30:70 und 90:10, besonders bevorzugt zwischen 40:60 und 80:20 liegt.

Die Herstellung von Disilanen ist vielfach bekannt. Hierzu sei beispielsweise auf E. Hengge et al., Monatshefte für Chemie 105 (1974) 671-83 und 99 (1968) 340-6 sowie auf W. H. Atwell et al., J. Organomet. Chem. 7 (1967) 71-8 und H. Watanabe et al. J. Organomet. Chem. 128 (1977) 173-5 verwiesen.

Bei dem erfindungsgemäßen Verfahren werden Disilane gemäß Formel (II) vorzugsweise in Mengen von 100 bis 3000 Gewichtsprozent, besonders bevorzugt 500 bis 2000 Gewichtsprozent, jeweils bezogen auf das Gewicht an eingesetztem Disilan gemäß Formel (I), eingesetzt.

Bei dem Rest $R^2$ handelt es sich bevorzugt um einen Kohlenwasserstoffrest mit 1 bis 12 Kohlenstoffatomen.

Beispiele für Rest $R^2$ sind die für Rest R und $R^3$ genannten Beispiele, Wasserstoffatom ausgenommen.

Bei dem Rest $R^2$ handelt es sich besonders bevorzugt um den Methyl-, Ethyl- und tert.-Butylrest, insbesondere um den Methyl- und tert.-Butylrest.

Vorzugsweise handelt es sich bei M in Formel (III) um Lithium, Natrium, Kalium, Rubidium oder Cäsium, wobei Natrium und Kalium besonders bevorzugt sind.

Beispiele für die im erfindungsgemäßen Verfahren als Katalysator eingesetzte Verbindung der Formel

3

(III) sind Natriummethylat, Natriumethylat, Natrium-tert.-butylat, Kalium-tert.-butylat und Kaliummethylat.

Bei dem erfindungsgemäßen Verfahren werden als Katalysator bevorzugt Natriummethylat, Natrium-methylat, Natrium-tert.-butylat und Kalium-tert.-butylat, besonders bevorzugt Natriummethylat und Kalium-tert.-butylat eingesetzt.

Bei dem erfindungsgemäßen Verfahren wird Katalysator vorzugsweise in Mengen von 0,03 bis 2,50 Gewichtsprozent, besonders bevorzugt 0,05 bis 0,80 Gewichtsprozent, jeweils bezogen auf das Gesamtgewicht an eingesetztem Disilan, eingesetzt.

Bei dem erfindungsgemäßen Verfahren eingesetzten Katalysatoren kann es sich um eine einzelne Art eines derartigen Katalysators wie auch um ein Gemisch aus mindestens zwei verschiedenen Arten derartiger Katalysatoren handeln.

Bei dem erfindungsgemäßen Verfahren erfolgt die Umsetzung vorzugsweise in inerter Atmosphäre, wie beispielsweise unter Argon-, Helium- oder Stickstoffatmosphäre, nach Vermischen der Reaktionsteilnehmer und Katalysator bei Temperaturen vorzugsweise zwischen 20 und 250 °C, besonders bevorzugt zwischen 40 und 210 °C, und einem Druck vorzugsweise zwischen 900 und 1100 hPa. Falls erwünscht können jedoch auch höhere oder niedrigere Drücke angewendet werden, wobei niedrigere Drücke bevorzugt sind, wenn das Reaktionsgemisch vinyl- und/oder allylgruppenhaltige Disilane enthält. Vorzugsweise werden bei dem erfindungsgemäßen Verfahren die flüchtigen Bestandteile, wie etwa entstehende, monomere Silane, während oder nach, besonders bevorzugt während, der Umsetzung destillativ aus dem Reaktionsgemisch entfernt.

Bei dem erfindungsgemäßen Verfahren werden vorzugsweise Organopolysilane mit durchschnittlich 8 bis 30 Siliciumatomen und einem mittleren Molekulargewicht zwischen 1000 und 2000 erhalten, wobei die Molekulargewichtsverteilung weitgehend monomodal und symmetrisch ist.

Das erfindungsgemäße Verfahren hat den Vorteil, daß es einstufig und relativ leicht durchzuführen ist, wobei Organopolysilane, die frei von Si-gebundenen Halogenatomen sind, erhalten werden.

Das erfindungsgemäße Verfahren hat des weiteren den Vorteil, daß in das Organopolysilan auf einfache Art und Weise funktionelle Gruppen, wie beispielsweise Phenyl-, Vinyl- und Allylgruppen oder zusätzliche Verzweigungsstellen, gezielt eingebaut werden können, wodurch die chemischen und physikalischen Eigenschaften des Organopolysilans in breiten Bereichen gesteuert werden können.

Die erfindungsgemäß hergestellten Organopolysilane können für alle Zwecke eingesetzt werden, für die auch bisher Organopolysilane eingesetzt werden konnten.

Besonders bevorzugt werden die erfindungsgemäß hergestellten Organopolysilane in Verfahren zur Herstellung von Siliciumcarbid (SiC)-Fasern verwendet.

SiC-Fasern und Verfahren zu ihrer Herstellung sind vielfach bekannt. SiC-Fasern werden vorwiegend aus Polysilanen oder Polycarbosilanen hergestellt. Allen Verfahren gemeinsam ist das Verspinnen eines geeigneten Polymeren mit anschließender Vernetzung und Pyrolyse unter Inertgas oder Vakuum.

Bei einem bevorzugten Verfahren zur Herstellung von SiC-Fasern werden erfindungsgemäß hergestellte Organopolysilane zu Fasern versponnen und in inerter Atmosphäre oder im Vakuum bei Temperaturen im Bereich von 800 bis 1400 °C umgesetzt.

Bevorzugte Temperaturen sind im Bereich von 1000 bis 1300 °C und bevorzugte Inertgase Argon und Stickstoff.

Das Verspinnen zu Fasern wird durch bekannte Verfahren, wie Trockenspinnen, Naßspinnen oder Schmelzspinnen, vorzugsweise jedoch durch Schmelzspinnen, durchgeführt. Hierbei werden aus der Schmelze Fasern mit einem mittleren Durchmesser von vorzugsweise 10 bis 50 $\mu$m versponnen und durch Einwirkung von Wärme, Licht, wie beispielsweise UV-Licht, Wasserdampf und/oder Sauerstoff, insbesondere jedoch Luft, vernetzt. Die vernetzten Fasern können unter Inertgas oder Luft bei Temperaturen von 50 bis 400 °C verstreckt werden.

Den erfindungsgemäß hergestellten Organopolysilanen können bei dem Verfahren zur Herstellung von SiC-Fasern 0 bis 30 Gewichtsprozent, vorzugsweise 1 bis 10 Gewichtsprozent, bezogen auf das Gewicht an eingesetztem Organopolysilan, Verbindung der allgemeinen Formel

$$R^5O[(R^5O)_2TiO]_pTi(OR^5)_3, \qquad (VI)$$

worin $R^5$ gleich oder verschieden sein kann und einen einwertigen Alkylrest bedeutet und p innerhalb der Grenzen von 0 bis 1000, bevorzugt 50 bis 500, liegt, zugesetzt werden.

Beispiele für Reste $R^5$ sind die für Rest R als Alkylreste genannten Beispiele. Bevorzugt handelt es sich bei Rest $R^5$ um den n-Propyl- und den n-Butylrest.

Die Herstellung der Verbindungen der allgemeinen Formel (VI) ist bekannt und beispielsweise in D.C. Bradle, R.C. Mehrotra und D.P. Gaur, Metal Alkoxides, Academic Press Inc., London, 1978 beschrieben.

Beim Zusetzen der Verbindungen der allgemeinen Formel (VI) geht man vorzugsweise derart vor, daß das erfindungsgemäß hergestellte Organopolysilan in einem organischen Lösungsmittel gelöst wird, die Verbindung der allgemeinen Formel (VI) zugesetzt wird und das Lösungsmittel wieder entfernt wird.

Bevorzugte Lösungsmittel sind aromatische oder aliphatische Kohlenwasserstoffe, wie Toluol, Xylol, Benzol und Petrolether verschiedener Siedefraktionen in Mengen von vorzugsweise 50 bis 300 Gewichtsprozent, besonders bevorzugt 70 bis 150 Gewichtsprozent, jeweils bezogen auf das Gewicht an eingesetztem Organopolysilan.

Die Entfernung des Lösungsmittels erfolgt dabei vorzugsweise bei einer Temperatur zwischen 80 und 250 °C und Drücken im Bereich von 10 bis 1000 Pa.

SiC-Fasern finden hauptsächlich Anwendung in Faserverbundwerkstoffen, vorzugsweise in Faserverbundwerkstoffen, deren Matrix aus Keramik, wie SiC und $Si_3N_4$, Glas oder Metallen, wie etwa Aluminium und Titan, besteht.

Die erfindungsgemäßen Organopolysilane werden des weiteren in Verfahren zur Herstellung von Siliciumcarbid (SiC) bzw. SiC-Keramik durch Erhitzen der erfindungsgemäß hergestellten Organopolysilane auf Temperaturen von über 600 °C in inerter Atmosphäre, wie beispielsweise unter Argon-, Helium- oder Stickstoffatmosphäre, oder im Vakuum, eingesetzt.

Bei einem bevorzugten Verfahren zur Herstellung von poröser SiC-Keramik werden erfindungsgemäß hergestellte Organopolysilane mit SiC-Pulver vermischt, zu Formkörpern verpreßt und in inerter Atmosphäre oder im Vakuum bei Temperaturen im Bereich von 700 bis 2200 °C umgesetzt.

Bevorzugte Temperaturen sind im Bereich von 900 bis 1500 °C und bevorzugte SiC-Pulver weisen eine mittlere Korngröße von 0,1 bis 100 $\mu$m, insbesondere 0,4 bis 50 $\mu$m, auf. Vorzugsweise werden 25 bis 95 Gewichtsprozent, insbesondere 50 bis 80 Gewichtsprozent, jeweils bezogen auf das Gewicht an eingesetztem Organopolysilan, SiC-Pulver verwendet.

Dem aus Organopolysilan und SiC-Pulver bestehenden Gemisch werden vorzugsweise noch Preßhilfsstoffe, insbesondere Fließhilfsmittel, in Mengen von 0,01 bis 5 Gewichtsprozent, insbesondere 0,2 bis 1 Gewichtsprozent, jeweils bezogen auf das Gewicht an eingesetztem SiC-Pulver, zugesetzt. Fließhilfsmittel sind beispielsweise in Aldinger, Kalz; Angew. Chemie 5, 381, 1987, beschrieben. Insbesondere werden Glycerin, Ammoniumstearat und Polyethylenglycole verwendet.

Beim Vermischen des erfindungsgemäßen Organopolysilans mit dem SiC-Pulver und gegebenenfalls mit dem Preßhilfsstoff geht man vorzugsweise derart vor, daß das Organopolysilan in einem organischen Lösungsmittel gelöst wird und mit den weiteren Komponenten vermischt wird. Bevorzugte Lösungsmittel sind aromatische oder aliphatische Kohlenwasserstoffe, wie Toluol, Xylol und Petrolether verschiedener Siedefraktionen, in Mengen von vorzugsweise 10 bis 99 Gewichtsprozent, insbesondere 35 bis 55 Gewichtsprozent, jeweils bezogen auf das Gemisch.

Anschließend wird das Lösungsmittel entfernt, vorzugsweise bei Temperaturen von 50 bis 200 °C und Drücken von 10 bis 1000 Pa. Der verbleibende Rückstand wird zerkleinert und gesiebt. Das so erhaltene Pulver mit einer maximalen Korngröße von vorzugsweise 500 $\mu$m, insbesondere 200 $\mu$m, wird mit Hilfe einer Presse gegebenenfalls unter Temperatureinwirkung zu einem Formkörper verpreßt. Dies kann in inerter Atmosphäre, Luft oder Vakuum erfolgen.

Die erfindungsgemäßen porösen Siliciumkeramiken werden insbesondere in der Filtertechnik eingesetzt. Durch die Korngrößen und die Korngrößenverteilung der eingesetzten SiC-Pulver und auch durch die Verhältnisse SiC-Pulver zu Organopolysilan lassen sich die Porengrößen und Porengrößenverteilung in den Keramiken einstellen. Einer der Vorteile von SiC-Filterplatten ist, daß organische Filterrückstände durch Oxidation leicht entfernt werden können, ohne daß dabei die Keramikfilter zerstört werden.

Des weiteren können die erfindungsgemäß hergestellten Organopolysilane in Verfahren zur Herstellung von Schutzüberzügen auf Basis von Siliciumcarbid eingesetzt werden. Diese Beschichtungen auf metallischen und nichtmetallischen Oberflächen sind thermisch und chemisch beständig.

Bei einem bevorzugten Verfahren zur Herstellung von Schutzüberzügen auf Basis von Siliciumcarbid werden erfindungsgemäß hergestellte Organopolysilane, vorzugsweise im Gemisch mit SiC-Pulver und organischem Lösungsmittel, auf das zu schützende Substrat aufgebracht und in inerter Atmosphäre, wie beispielsweise unter Argon- oder Stickstoffatmosphäre oder im Vakuum, bei Temperaturen im Bereich von 700 bis 1500 °C beziehungsweise unter reaktiver Atmosphäre, wie beispielsweise in sauerstoffhaltigen Gasgemischen, bei Temperaturen von 200 bis 700 °C umgesetzt. Besonders bevorzugt werden dabei Gemische aus 10 bis 80 Gewichtsprozent, vorzugsweise 15 bis 40 Gewichtsprozent, erfindungsgemäß hergestelltem Organopolysilan, 10 bis 80 Gewichtsprozent, bevorzugt 20 bis 50 Gewichtsprozent, SiC-Pulver mit einer mittleren Korngrößenverteilung von 0,1 bis 20 $\mu$m, vorzugsweise 0,3 bis 5 $\mu$m, und 10 bis 80 Gewichtsprozent, vorzugsweise 15 bis 60 Gewichtsprozent, organischem Lösungsmittel, wie aliphatische und aromatische Kohlenwasserstoffe, bevorzugt Toluol, Xylol und Petrolether verschiedener Siedefraktionen, eingesetzt.

Die Auftragung der Beschichtung kann in beliebiger für das Auftragen von flüssigen oder pastösen Stoffen auf Substrate geeigneter Weise, zum Beispiel durch Tauchen, Sprühen, Streichen, Gießen oder Walzen, erfolgen.

Nach dem Auftragen wird die Beschichtung vorzugsweise 15 Minuten bis 2 Stunden bei Temperaturen von vorzugsweise 10 bis 200 °C in inerter oder reaktiver Atmosphäre getrocknet.

Vorzugsweise weisen die erfindungsgemäß hergestellten Schutzüberzüge eine Dicke von 2 - 2000 $\mu$m, insbesondere 2 - 50 $\mu$m, auf. Sie finden insbesondere Verwendung zur Erzeugung thermisch und chemisch beständiger Oberflächenbeschichtungen auf Metallen, Keramik, Glaskeramik, Faserwerkstoffen und Kohlenstoff.

Die erfindungsgemäßen Organopolysilane können des weiteren zur Herstellung von negativen Photoresistbeschichtungen, beispielsweise bei der Erzeugung von Leiterplatten und Halbleiterbauteilen in für die Herstellung von negativen Photoresistbeschichtungen aus Organopolysilanen an sich bekannter Weise eingesetzt werden, wobei erfindungsgemäß hergestelltes Organopolysilan auf eine geeignete, glatte oder ebene Unterlage wie ein Halbleiterplättchen aufgebracht, durch eine Maske hindurch belichtet wird, wonach die unbelichteten Teile des Organopolysilanüberzugs mit einem Lösungsmittel, wie Toluol, von den belichteten, vernetzten Stellen des Überzugs getrennt werden.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 23 °C, bzw. bei einer Temperatur, die sich beim Zusammengeben der Reaktanden bei Raumtemperatur ohne zusätzliche Heizung oder Kühlung einstellt, durchgeführt.

Die unter I), II) und III) sowie in den Beispielen 1 bis 4 beschriebenen Umsetzungen werden unter Argonatmosphäre und einem Druck von etwa 1000 hPa durchgeführt.

Die Bestimmung des Gewichtsmittels $M_w$ und des Zahlenmittels $M_n$ erfolgt aus den entsprechenden GPC-Chromatogrammen mit Polystyrolstandards.

Im Folgenden bedeuten die Abkürzungen

Me    - Methylrest,

Ph    - Phenylrest und

Vi    - Vinylrest.


I) Herstellung von 1,1,2-Trimethyl-1,2-dimethoxyphenyldisilan


24,1 g Magnesiumspäne, 5 ml trockenens Tetrahydrofuran und 5 ml Brombenzol werden in einem Kolben mit Rückflußkühler vorgelegt. Anschließend werden 150 g Brombenzol in 125 ml Tetrahydrofuran so schnell zugetropft, daß die Reaktionsmischung ohne äußere Wärmezufuhr am Rückfluß siedet. Nach beendeter Reaktion ist das Magnesium vollständig verbraucht und die so erhaltene Grignardverbindung wird filtriert.

194 g 1,1,2-Trimethyltrimethoxydisilan (97 %ig) und 200 ml Toluol werden in einem Kolben vorgelegt, auf 6 bis 10 °C gekühlt und mit der oben erhaltenen Grignardverbindung langsam versetzt. Anschließend werden die ausgefallenen Magnesiumsalze abfiltriert, der flüssige Reaktionsrückstand mit Hexan ausgeschüttelt und nochmals filtriert. Die destillative Aufarbeitung erfolgt bei 77 bis 100 °C und einem Druck von 100 Pa, wobei 75 g 1,1,2-Trimethyl-1,2-Dimethoxyphenyldisilan erhalten werden.


II) Herstellung von 1,2-Dimethyl-1,2-dimethoxydiphenyldisilan


105 g 1,2-Dimethyltetramethoxydisilan und 100 g Toluol werden in einem Kolben vorgelegt und innerhalb von 4 Stunden bei Raumtemperatur mit der oben unter I) erhaltenen Grignardverbindung versetzt. Anschließend wird weitere 16 Stunden gerührt. Nach Abdestillieren des Lösungsmittels wird der Rückstand mit 600 ml Petrolether der Siedefraktion 170 -
200 °C aufgenommen und filtriert. Der Petrolether wird anschließend bei 120 °C im Vakuum abgezogen, aus dem verbleibenden Rückstand kristallisieren 175 g 1,2-Dimethyl-1,2-dimethoxydiphenyldisilan aus.


III) Herstellung von 1,2-Dimethyl-1,2-dimethoxydivinyldisilan


105 g 1,2-Dimethyltetramethoxydisilan und 250 ml Tetrahydrofuran werden in einem Kolben vorgelegt und langsam bei einer Temperatur von 15 bis 20 °C mit 620 ml Vinylgrignardverbindung (15 %ig; käuflich erhältlich bei der Firma Chemetall) versetzt. Anschließend wird 16 Stunden gerührt. Das Tetrahydrofuran wird bei 30 °C und einem Druck von 120 hPa abdestilliert, der Rückstand mit 1 1 Hexan aufgenommen und filtriert. Nach dem Abdestillieren der Lösungsmittel bei 85 bis 100 °C und einem Druck von 36 Pa erhält man 1,2-Dimethyl-1,2-dimethoxydivinyldisilan, das noch mit 1,2-Dimethyltetramethoxydisilan und 1,2-Dimethyl-1,1,2-trimethoxyvinyldisilan verunreinigt ist.

**Beispiel 1**

A)

Ein Gemisch aus 650 g 1,1,2-Trimethyltrimethoxydisilan, 350 g 1,2-Dimethyltetramethoxydisilan und 41 g 1,2-Dimethyl-1,2-dimethoxydiphenyldisilan erwärmt sich nach der Zugabe von 1 g Natriummethylat von 23 °C ohne äußere Wärmezufuhr auf 96 °C. Anschließend wird das Gemisch auf 210 °C erwärmt, wobei 758 g eines Gemisches aus Methytrimethoxysilan und Dimethyldimethoxysilan abdestillieren. Es werden 292 g Rückstand erhalten, die zur Abtrennung der unerwünschten Oligomeren in 300 g Petrolether mit einem Siedebereich von 170 bis 200 °C gelöst werden. Anschließend werden Lösungsmittel und Oligomere bei 230 °C und 10 Pa abdestilliert. Der so erhaltene Rückstand von 263 g ist ein Organopolysilan der durchschnittlichen Formel

$$[MeSi]_a[MeSi(OMe)]_b[MeSiPh]_c[Me_2Si]_d,$$

wobei jeweils durchschnittlich a gleich 8,9, b gleich 2,7, c gleich 0,8 und d gleich 9,0 ist, das molare Verhältnis von Methylgruppen zu Methoxygruppen zu Phenylgruppen 100:9,0:3,0 beträgt, das Verhältnis von numerischem Mittel $M_n$ zu Gewichtsmittel $M_w$ 1000/4500 ist und der Erweichungsbereich bei 70 °C liegt.

Analog zu der oben angegebenen Vorschrift werden die in Tabelle 1 angegebenen Umsetzungen durchgeführt, wobei die Angaben unter

A - die laufende Nummer des Versuchs wiedergeben,
B - die Menge an 1,1,2-Trimethyltrimethoxydisilan in g,
C - die Menge an 1,2-Dimethyltretramethoxydisilan in g,
D - die Menge an 1,2-Dimethyl-1,2-dimethoxydiphenyldisilan in g,
E - die Menge an Destillat in g,
F - die Menge an erhaltenem Organopolysilan in g,
G - die $M_n$/$M_w$-Werte,
H - die Erweichungstemperatur in °C und
I - das molare Verhältnis von Methylgruppen zu Methoxygruppen zu Phenylgruppen

bedeuten.

**Tabelle 1**

| A | B | C | D | E | F | G | H | I |
|---|---|---|---|---|---|---|---|---|
| 1.2 | 600 | 400 | 41 | 785 | 255 | 900/2200 | 130 | 100:4,8:3,1 |
| 1.3 | 610 | 390 | 83 | 802 | 292 | 970/2250 | 110 | 100:5,8:4,8 |
| 1.4 | 600 | 400 | 124 | 827 | 308 | 930/1850 | 80 | 100:5,4:6,3 |
| 1.5 | 600 | 400 | 166 | 837 | 350 | 1250/2500 | 85 | 100:6,1:7,9 |
| 1.6 | 510 | 490 | 83 | 837 | 250 | 950/1950 | 175 | 100:5,6:4,8 |

B)

Eine Lösung des so erhaltenen Organopolysilans in Petrolether mit einem Siedebereich von 170-200 °C wird nun mit 25 g Poly-n-butyltitanat (käuflich erhältlich bei Johnson Matthey GmbH, Alfa Products) versetzt und eine Stunde bei 130 °C gerührt. Anschließend werden bei 230 °C und 10 Pa das Lösungsmittel und Oligomere abdestilliert. Es wird ein graublaues Harz erhalten. Die Angaben zu dieser Umsetzung finden sich in Tabelle 2, wobei

K - die Menge an eingesetztem Organopolysilan in g,
L - die Menge an Petrolether in g,
M - die $M_n/M_w$-Werte,
N - die Erweichungstemperatur in °C und
O - das molare Verhältnis von Methylgruppen zu Methoxygruppen zu Phenylgruppen

bedeuten.

Tabelle 2

| A | K | L | M | N | O |
|---|---|---|---|---|---|
| 1.1 | 270 | 300 | 925/4000 | 70 | 100 : 8,7 : 3,0 |
| 1.2 | 270 | 300 | 870/1920 | 130 | 100 : 4,4 : 3,1 |
| 1.3 | 270 | 300 | 920/1940 | 110 | 100 : 5,3 : 4,7 |
| 1.4 | 270 | 300 | 870/1600 | 80 | 100 : 5,0 : 6,3 |
| 1.5 | 270 | 300 | 1220/2330 | 85 | 100 : 5,6 : 7,7 |
| 1.6 | 270 | 300 | 912/1760 | 175 | 100 : 5,1 : 4,7 |

**Beispiel 2**

A)

Ein Gemisch aus 610 g 1,1,2 Trimethyltrimethoxydisilan, 390 g 1,2-Dimethyltetramethoxydisilan und 132 g 1,1,2-Trimethyl-1,2-dimethoxyphenyldisilan wird auf 38°C erwärmt und 1,5 g Natriummethylat zugegeben, wobei die Temperatur dieses Gemisches auf 95°C ansteigt. Anschließend wird das Gemisch auf 150°C erwärmt, wobei 727 g eines Gemisches aus Dimethyldimethoxysilan und Methyltrimethoxysilan im Verhältnis 20:80 abdestillieren. Nach dem Abkühlen des Gemisches auf 75°C wird dieses einem Druck von 80 Pa ausgesetzt, wobei weitere 43 g des oben näher bezeichneten Monosilangemisches abdestillieren. Es werden 330 g Rückstand erhalten, die zur Abtrennung der unerwünschten Oligomeren in 400 g Petrolether mit einem Siedebereich von 170 bis 200 °C gelöst werden. Anschließend werden Lösungsmittel und Oligomere bei 230 °C und 10 Pa abdestilliert. Der so erhaltene Rückstand von 300 g ist ein Organopolysilan der in Beispiel 1 angegebenen durchschnittlichen Formel, wobei das molare Verhältnis von Methylgruppen zu Methoxygruppen zu Phenylgruppen 100:5,7:7,0 beträgt, das Verhältnis von numerischem Mittel $M_n$ zu Gewichtsmittel $M_w$ 870/1850 ist und die Erweichungstemperatur bei 115°C liegt.

B)

270 g des so erhaltenen Organopolysilans werden in 300 g Xylol gelöst, mit 50 g Tetra-n-butyltitanat (käuflich erhältlich bei Fluka Feinchemikalien GmbH, D7910 Neu-Ulm) versetzt und eine Stunde lang bei 130 °C gerührt. Anschließend wird das Lösungsmittel bei 230°C und 10 Pa abdestilliert. Es wird ein graublaues Harz erhalten, welches bei 120°C erweicht und ein Verhältnis von numerischem Mittel $M_n$ zu Gewichtsmittel $M_w$ von 800/2000 aufweist. Das molare Verhältnis von Methylgruppen zu Methoxygruppen zu Phenylgruppen beträgt 100:5,6:7,0.

C)

Die unter B) beschriebene Verfahrensweise wird wiederholt mit der Abänderung, daß anstelle von 50 g Tetra-n-butyltitanat 50 g Tetra-iso-propyltitanat (käuflich erhältlich bei Fluka Feinchemikalien GmbH, D-7910 Neu-Ulm) eingesetzt werden. Es wird ein graublaues Harz erhalten, welches bei 120°C erweicht und ein Verhältnis von numerischem Mittel $M_n$ zu Gewichtsmittel $M_w$ von 800/2000 aufweist. Das molare Verhältnis von Methylgruppen zu Methoxygruppen zu Phenylgruppen beträgt 100:5,6:7,0.

**Vergleichsbeispiel 1**

Die in Beispiel 2 unter A) beschriebene Arbeitsweise wird wiederholt mit der Abänderung, daß anstelle der 132 g 1,1,2-Trimethyl-1,2-dimethoxyphenyldisilan 100 g Phenylmethyldimethoxysilan eingesetzt werden. Es wird ein Organopolysilan mit einem molaren Verhältnis von Methylgruppen zu Methoxygruppen zu Phenylgruppen von 100:4,6:3,6 erhalten.

**Beispiel 3**

A)

Die in Beispiel 2 unter A) beschriebene Arbeitsweise wird wiederholt mit der Abänderung, daß anstelle der 132 g 1,1,2-Trimethyl-1,2-dimethoxyphenyldisilan 100 g 1,2-Dimethyl-1,2-dimethoxydivinyldisilan eingesetzt werden und die Maximaltemperatur bei der Aufarbeitung (Destillation) 150 $^\circ$C beträgt. Es werden 330 g Organopolysilan erhalten, wobei das molare Verhältnis von Methylgruppen zu Methoxygruppen zu Vinylgruppen 100:5,7:1,3 beträgt, das Verhältnis von numerischem Mittel $M_n$ zu Gewichtsmittel $M_w$ 830/1950 ist und die Erweichungstemperatur bei 105 $^\circ$C liegt.

B)

Die in Beispiel 2 unter B) beschriebene Arbeitsweise wird mit dem oben unter A) erhaltenen Organopolysilan wiederholt, mit der Abänderung daß die Maximaltemperatur bei der Aufarbeitung (Destillation) 150 $^\circ$C beträgt. Es wird ein graublaues Harz erhalten, welches bei 125 $^\circ$C erweicht und ein Verhältnis von numerischem Mittel $M_n$ zu Gewichtsmittel $M_w$ von 850/2100 aufweist. Das molare Verhältnis von Methylgruppen zu Methoxygruppen zu Vinylgruppen beträgt 100:5,7:0,9.

**Beispiel 4**

A)

Die in Beispiel 2 unter A) beschriebene Verfahrensweise wird wiederholt mit der Abänderung, daß anstelle der 132 g 1,1,2-Trimethyl-1,2-dimethoxyphenyldisilan ein Gemisch aus 66 g 1,1,2-Trimethyl-1,2-dimethoxyphenyldisilan und 66 g 1,2-Dimethyl-1,2-dimethoxydivinyldisilan eingesetzt werden und die Maximaltemperatur bei der Aufarbeitung (Destillation) 150 $^\circ$C beträgt. Es werden 330 g Organopolysilan erhalten, wobei das molare Verhältnis von Methylgruppen zu Methoxygruppen zu Vinylgruppen zu Phenylgruppen 100:5,6:0,9:3,0 beträgt, das Verhältnis von numerischem Mittel $M_n$ zu Gewichtsmittel $M_w$ 790/3500 ist und die Erweichungstemperatur bei 105 $^\circ$C liegt.

B)

Die in Beispiel 2 unter B) beschriebene Arbeitsweise wird mit dem oben unter A) erhaltenen Organopolysilan wiederholt, mit der Abänderung daß die Maximaltemperatur bei der Aufarbeitung (Destillation) 150 $^\circ$C beträgt. Es wird ein graublaues Harz erhalten, welches bei 120 $^\circ$C erweicht und ein Verhältnis von numerischem Mittel $M_n$ zu Gewichtsmittel $M_w$ von 800/4000 aufweist. Das molare Verhältnis von Methylgruppen zu Methoxygruppen zu Phenylgruppen zu Vinylgruppen beträgt 100:5,6:3,0:0,5.

**Beispiel 5**

Je 150 g eines in den Beispielen 1 B), 3 B) und 4 B) sowie in Beispiel 2 unter A), B) und C) hergestellten Harzes werden unter Argonatmosphäre mit einer Heizrate von 20 $^\circ$C pro Minute auf 1250 $^\circ$C erhitzt. Nach Abkühlen auf Raumtemperatur wird schwarzes Siliciumcarbid der in Tabelle 3 aufgeführten Zusammensetzung erhalten.

Tabelle 3

| Harz aus Beispiel | Rückstand[1) [%] | Si [%] | C [%] | H [%] | Ti [%] |
|---|---|---|---|---|---|
| 1 B)[2) | 44-48 | 52-61 | 29-32 | 0,6-0,4 | 2,1-2,5 |
| 2 A) | 41-45 | 52-58 | 28-31 | 0,6-0,4 | 0 |
| 2 B), C) | 46-49 | 52-58 | 28-31 | 0,6-0,4 | 1,2-1,5 |
| 3 B) | 55-63 | 52-58 | 28-31 | 0,6-0,4 | 1,2-1,5 |
| 4 B) | 53-58 | 52-58 | 28-31 | 0,6-0,4 | 1,2-1,5 |

1)   bezogen auf das Gewicht an eingesetztem Harz

2)   Versuche 1.1 bis 1.6 unter B)

**Beispiel 6**

Die in den Beispielen 1B, 2B, 2C, 3B und 4B hergestellten Organopolysilane werden jeweils in einer Kolben-Schmelzspinnvorrichtung auf eine Temperatur, die 25 bis 65 °C über der jeweiligen Erweichungstemperatur liegt, erwärmt, mit der Maßgabe, daß vinylgruppenhaltige Organopolysilane auf maximal 150 °C erwärmt werden, und mit 10 bis 100 bar jeweils durch eine 100 $\mu$m-Lochdüse und durch eine 300 $\mu$m-Lochdüse versponnen, wobei die Abzugsgeschwindigkeit im Bereich von 35 bis 250 m/Minute variiert wird. Bei Austritt aus der Spinndüse sind die Fasern blaugrau und nicht transparent und zeigen je nach den gewählten Spinnbedingungen Einzelfadendurchmesser im Bereich von 10 bis 150 $\mu$m. Die Fasern werden 3 bis 20 Tage an Licht und Luft gelagert, wobei sie farblostransparent werden. Die so erhaltenen Faserbündel zeigen gute Reißfestigkeit und Flexibilität. Sie werden unter einer Zugspannung von 0,5 bis 2,0 g kontinuierlich durch einen mit Argon gespülten 1250 °C heißen Rohrofen mit einer Heizlänge von 0,25 m mit einer Geschwindigkeit von 0,5 m/Minute gezogen.

Die so erhaltenen SiC-Fasern haben eine durchschnittliche Zusammensetzung von:

| | | | |
|---|---|---|---|
| Silicium: | 45 | bis | 54 Gewichtsprozent |
| Kohlenstoff: | 23 | bis | 28 Gewichtsprozent |
| Sauerstoff: | 15 | bis | 25 Gewichtsprozent |
| Titan: | 0 | bis | 2,5 Gewichtsprozent |
| Wasserstoff: | < 0,5 | Gewichtsprozent | |

Die Zugfestigkeit der so erhaltenen SiC-Fasern beträgt abhängig von ihrem Durchmesser

| | | | |
|---|---|---|---|
| 0,45-0,6 GPa | bei | 100 $\mu$m, | |
| 0,6 -0,8 GPa | bei | 50 $\mu$m, | |
| 0,7 -1,1 GPa | bei | 30 $\mu$m und | |
| 2,5 -3,2 GPa | bei | 10 $\mu$m. | |

Der spezifische elektrische Widerstand liegt bei $10^3$ $\Omega \cdot$cm.

Die Zugfestigkeitswerte bleiben an Luft bei Temperaturen bis circa 1200 °C und unter inerter Atmosphäre bis circa 1300 °C mindestens eine Stunde erhalten.

**Patentansprüche**

1. Verfahren zur Herstellung von Organopolysilanen, dadurch gekennzeichnet, daß mindestens ein Disilan der allgemeinen Formel

$$R_k R^3_m Si_2 (OR^1)6\text{-}k\text{-}m \qquad (I)$$

worin
    R      gleich oder verschieden sein kann und Wasserstoffatom oder einwertige, gesättigte organische Reste bedeutet,
    $R^3$      gleich oder verschieden sein kann und einwertige, ungesättigte organische Reste bedeutete,
    $R^1$      gleich oder verschieden sein kann und einwertige Alkylgruppen bedeutet,
    k      0, 1, 2 oder 3 und
    m      1, 2, 3 oder 4 bedeutet, wobei die Summe aus k und m kleiner oder gleich 4 ist,
gegebenenfalls im Gemisch mit einer Verbindung der Formel

$$R_n Si_2 (OR^1)6\text{-}n \qquad (II)$$

worin R und $R^1$ jeweils gleich oder verschieden sein können und eine der oben dafür angegebenen Bedeutungen haben und n 0, 1, 2 oder 3 ist,

in Anwesenheit von mindestens einer Verbindung der allgemeinen Formel

$$MOR^2 \qquad (III)$$

worin $R^2$ einen einwertigen Kohlenwasserstoffrest und M Alkalimetallatom bedeutet, umgesetzt wird.

2. Verfahren nach Anspruch 1, dadurch gekennzeichnet, daß Disilan gemäß Formel (II) mitverwendet wird.

3. Verfahren nach Anspruch 1 oder 2, dadurch gekennzeichnet, daß als Disilan der Formel (II) ein Gemisch aus Disilan der Formel

$$R_3 Si_2 (OR^1)_3 \qquad (IV)$$

und Disilan der Formel

$$R_2 Si_2 (OR^1)_4 \qquad (V)$$

worin R und $R^1$ eine der oben angegebenen Bedeutungen haben, eingesetzt wird.

4. Verfahren nach einem oder mehreren der Ansprüche 1 bis 3, dadurch gekennzeichnet, daß das Molverhältnis von Disilan der Formel (IV) zu Disilan der Formel (V) in dem Gemisch vorzugsweise zwischen 30:70 und 90:10, besonders bevorzugt zwischen 40:60 und 80:20 liegt.

5. Verfahren nach einem oder mehreren der Ansprüche 1 bis 4, dadurch gekennzeichnet, daß Disilane gemäß Formel (II) vorzugsweise in Mengen von 100 bis 3000 Gewichtsprozent, jeweils bezogen auf das Gewicht an eingesetztem Disilan gemäß Formel (I), eingesetzt wird.

6. Verfahren nach einem oder mehreren der Ansprüche 1 bis 5, dadurch gekennzeichnet, daß Verbindung der Formel (III) in Mengen von 0,03 bis 2,50 Gewichtsprozent, bezogen auf das Gesamtgewicht an eingesetztem Disilan, eingesetzt wird.

7. Verfahren zur Herstellung von SiC-Fasern, dadurch gekennzeichnet, daß ein nach einem oder mehreren der Ansprüche 1 bis 6 hergestelltes Organopolysilan zu Fasern versponnen und unter inerter Atmosphäre oder im Vakuum bei Temperaturen im Bereich von 800 bis 1400 °C umgesetzt wird.

**8.** Verfahren nach Anspruch 7, dadurch gekennzeichnet, daß dem nach einem oder mehreren der Ansprüche 1 bis 6 hergestellten Organopolysilan Verbindung der allgemeinen Formel

$$R^5O[(R^5O)_2TiO]_pTi(OR^5)_3, \qquad (VI)$$

worin $R^5$ gleich oder verschieden sein kann und einen einwertigen Alkylrest bedeutet und p innerhalb der Grenzen von 0 bis 1000 liegt, zugesetzt wird.

**9.** Verfahren zur Herstellung von poröser SiC-Keramik, dadurch gekennzeichnet, daß ein nach einem oder mehreren der Ansprüche 1 bis 6 hergestelltes Organopolysilan mit SiC-Pulver vermischt, zu Formkörpern verpreßt und unter inerter Atmosphäre oder im Vakuum bei Temperaturen im Bereich von 700 bis 2200 °C umgesetzt wird.

**10.** Verfahren zur Herstellung von Schutzüberzügen auf Basis von Siliciumcarbid, dadurch gekennzeichnnet, daß ein nach einem oder mehreren der Ansprüche 1 bis 6 hergestelltes Organopolysilan auf das zu schützende Substrat aufgebracht und unter inerter Atmosphäre bei Temperaturen im Bereich von 700 bis 1500 °C beziehungsweise unter reaktiver Atmosphäre bei Temperaturen von 200 bis 700 °C umgesetzt wird.